# EUROPEAN PATENT SPECIFICATION

(11) **EP 2 689 861 B1**
(45) Date of publication and mention of the grant of the patent: **02.07.2014**
(21) Application number: 12382299.1
(22) Date of filing: 24.07.2012
(51) Int. Cl.: B09B 3/00

(54) **Waste treatment and valorization process, treatment plant to carry out this process and product obtained in the process**
Abfallbehandlungs- und -aufwertungsverfahren, Behandlungsanlage zur Durchführung des Verfahrens und in dem Verfahren erhaltenes Produkt
Procédé de valorisation et de traitement des déchets, installation de traitement pour mettre en 'uvre ce procédé et produit obtenu selon ce procédé

(43) Date of publication of application: 29.01.2014
(73) Proprietor: Biotec Recycling AG, 4052 Basel (CH)
(72) Inventor: Pascual Tortella, Jose, 4052 Basel (CH)
(74) Representative: Morgades y Manonelles, Juan Antonio

(56) References cited:
- EP-A1- 1 217 059
- US-A- 4 829 911
- US-A- 5 220 112
- US-B1- 6 471 443

## Description

### Object of the Invention.

More specifically, the invention refers to a process and to the corresponding urban waste treatment plant for reducing the aforementioned waste by way of combustion, obtaining energy from the aforementioned treatment.

### State of the Art.

Urban waste management processes that base their main method on the combustion of the aforementioned waste to minimise it are the state of the art of the invention.
Related art processes are described in documents US-A-4829911 and EP-A-1217059 among others.
The aforementioned known processes start from a storage of urban waste as a power source for the plant, separated by various means, as shown in Spanish patent no. ES 2086264, using grinding, sterilisation, electromagnetic separation, etc. Dedicating treated urban waste solely to a process of minimisation of the same, through combustion or gasification of the same.

This previous process creates poor management of urban waste, as the storage of the same gives off bothersome odours, as well as creating a habitual sediment in the lower part of the waste storage tank, as the uncontrolled arrival of waste means that this storage tank is never emptied, so the lower level remains indefinitely, with the negative consequences associated with having rubbish compacted for a long time in an open area.

In the combustion of the products there are already processes in which waste is burned as it arrives, once it has been pre-treated, to obtain calorific energy, which in the exchangers will be transformed into a steam that will generate electricity in the corresponding turbines associated with the process. This manner of burning urban waste means that the temperature reached in the combustion furnaces is not stable enough to provide an efficient process, as the pre-treated waste that enters may at times contain materials with an ideal calorific power for the process, and then be by followed by waste with a much lower calorific power, such as organic fractions with a great deal of water.

It is also understood that the known processes are based on the use of a simple furnace, with only a single combustion chamber, generating in it the gases for the thermal exchange, and from which the residual ash and smoke are expelled to the outside of the process.

As has been indicated, the smoke of the aforementioned known processes is expelled to the outside with the load of contaminants that it contains, and a large number of filters must be used to minimise the said impact. In some processes, the smoke is channelled to a recuperator to take advantage of the temperature of the smoke.

Known processes and plants do not provide treatment solutions that minimise the environmental impact of the aforementioned treatment and create a solid product that is an alternative to electricity that can be stored and used or sent out later.

### Scope of the Invention.

The purpose of the present invention is to dispose of a process for the treatment and evaluation of urban waste that allows coexistence with nearby residential populations, as process is respectful in what is given off by the process.

It is also the purpose of the present invention to produce energy from the process of urban waste management, in a manner that is efficient, controllable, and stable.

Lastly, the purpose of the invention is to obtain an alternative densified solid biofuel product from the treatment that can be stored and used as fuel, whether within the plant itself or by third parties upon sale.

### Description of the Invention.

The invention exists as a process of urban waste management and evaluation, which is carried out in a plant designed for this purpose, and which starts from the reception of the aforementioned urban waste.

The system for the reception-storage of waste is based on a storage limited to the capacity of urban waste management, without there being storage of the same over the course of the plant's working time.

This allows the avoidance of the accumulation of waste, and its rotting or degeneration into products that may give off undesirable odours or gases. In addition to this, the plant operates under conditions of environmental depression, so that the environmental pressure within is less than that outside; this assures that the plant doesn't give off odours in an uncontrolled manner when its doors are opened and when vehicles or people enter or leave the plant.

The vehicles that bring in the waste (as well any vehicle that goes in or out of the plant) pass through a cleaning process of its wheels and points of contact with the plant, to avoid giving off odours due to these contacts. These points of contact are normally cleaned using water heated by the process itself.

The process starts from the reception of waste and its classification, allowing different types of waste to be separated from the beginning (by separate arrival of what is collected, or by the separation of the same within the plant) according to the number of previous combustion chambers disposed of for carrying out the process. This first separation allows the process to be adapted to the plant's investment limitations, starting from a minimum investment comprising at least one previous chamber for all organic waste, as well as making future enlargements, coming to be able to separate into various previous chambers to more efficiently control the process of pre-combustion according to the type of waste placed in the aforementioned previous chamber. This avoids the unknowing use of waste that, in uncontrolled amounts, may lower the calorific contribution to the process.

Before entering into these previous chambers, each group of waste that arrives at the plant is pre-treated. They are crushed, visually separated, and metals are separated, then later the waste is further ground and screened using a rotary sieve. Finally it is transported towards the combustion process, having been passed through an X-ray separator and through the elements necessary to give the pre-treated urban waste the necessary moisture, size, temperature, etc., for the process to be efficient.

A part of the pre-treated waste, determined by the control system according to the requirements for the process of producing energy by way of combustion, is removed from it before the previous combustion, and is taken to perform the necessary operations that will transform it into densified solid biofuel.

The process control system will know the number of previous chambers, the groups of waste separated, and the class and features of the waste that will be burnt in each one of them, and the amounts of waste necessary in the previous combustion chambers. In this way, for the most important part of the pre-treated waste, the amount of waste will be placed into each of the previous chambers to be combusted under conditions of pyrolysis, having the addition of oxygen at 50 - 80% of the stoichiometric value of the combustion ratio, to avoid the formation of dioxins and furans as much as possible. In addition to this, a system for the elimination of nitrogen dioxides is added, usually using ammonia injection for this purpose.

The by-product resulting as ash from the previous combustion of the waste is placed again in the previous combustion chamber to perform another pre-combustion process on the aforementioned waste-by-products as many times as deemed fit, taking advantage that in the first previous combustion the waste wasn't totally burnt, so that it can be taken advantage of again, avoiding the wasting of part of its calorific power. Once the waste has been burnt and it has been decided not to put it through any further previous combustion, the ash as an inert product is handled by being gathered into appropriate containers and taken advantage of for the usual processes and applications of this type of inert products, such as auxiliary building materials, dry matter for motorway conglomerate, as an ingredient in fertiliser for agriculture, etc.

The smoke created in the previous combustion contains mainly hydrocarbons and carbon monoxide, and it has remained in the previous chamber for at least 2 seconds at a temperature of between 850°C and 1000°C. This smoke is not directly used in the thermal exchange and expelled to the outside, but rather is taken to a second, post-combustion chamber.

In the post-combustion chamber, the complete combustion of the smoke obtained in the previous chamber is performed by the addition of biomass or another nonpolluting fuel, such as natural gas. The resulting smoke has a higher temperature thanks to the addition of the aforementioned biomass, which has been added as separated waste in the beginning and suitably pre-treated to have it the optimal size and in optimal condition for use. It is added in the process of combustion of the post-combustion chamber and in the previous combustion chamber, as well as in the parallel process of pellet production.

The aforementioned addition of biomass or natural gas makes the smoke reach a temperature of around 1200 °C; the smoke remains in the chamber for a minimum of 6 seconds, eliminating the hypothetical particles of organic material that may exist in the aforementioned smoke, so that the odours that this aforementioned organic material might give off are eliminated. In the same manner, as the nature of the emissions of the aforementioned smoke is substantially less aggressive than that obtained by the usual known processes, investment in smoke filters is minimised.

The high-temperature smoke produced here is used in the steam generator, and thanks to this high temperature, it can make steam from the water that passes through it, and this steam will be what moves the turbine that pulls the electrical generator, which will produce electricity. This process results from the usual manner of producing electricity through a turbine moved by steam, and the actions of condensation, recovery of heat in economisers before definitively expelling the smoke outside are known as usual procedures.

The plant will have all of the usual elements for the transfer of waste, filters, refrigerators, fuel input, and other known facilities, in addition to specific ones for the development of the invention.

A gas cleaning system is introduced advantageously to the process to sweep the circuit and keep the levels of emissions within the legally established parameters, as in the first combustions, gases appear with contents of NOx, SOx and dioxins due to the process' lack of combustion temperature, something which is remedied moments later as the complete pre-combustion and post-combustion process is performed.

Parallel to this, once part of the pre-treated waste has been taken from the process of producing electricity before its previous combustion, the production of densified solid biofuel continues. This densified solid biofuel is generally known as pellets, created from mixing part of the biomass and part of the aforementioned pre-treated waste, which is still organic matter coming from the rubbish that comes in, to form a fuel product used both in the process of creating energy and by third parties, as it is removed and sold.

This mixture for making pellets is made using a specific composition in order to achieve a suitable compactness, a specific size and shape, and ideal energetic-caloric features.

The composition is based on a proportion of biomass of 10 to 50% and of pre-treated waste of 90 to 50% and the relative humidity of the mixture will be between 5 - 15%. In this manner, a minimum calorific power of around 4000 Kcal/kg is obtained.

After the mixture is processed using the habitual means of compacting and producing pellets, the pellets obtained have a density of around 1 to 1.5 kg/dm3, preferably with diameters ranging from 6 to 22 mm and lengths of 3.5 to 6.5 cm, although this is not limiting in terms of other diameters and lengths of pellets.

The process control system will include the parameters of the features of the waste, controlling the pre-treatment of it, as well as the feeding of this waste, air, fuel and flow of smoke into the previous and post-combustion chambers. Later it will regulate the flow of smoke to the steam generators, as well as the process of obtaining energy in the turbine itself and the rest of the known sub-processes related to cooling the smoke, economisers, etc.

This control system will have a manner of analysing and controlling the features and composition of the smoke generated in order to know the status of the process, and the application of corrective measures such as the system of ammonia injection or the sweeping system, as well as the regulation of the types of gases that are expelled to the outside. All of this will be guided by the control system totally automatically, thanks to sensors and analyzers, as well as the actuators of the equipment.

Other details and characteristics shall be shown throughout the description below referring to drawings attached to this report which are shown for illustrative but not limiting purposes only in a drawing of the invention.

### Description of the drawings.

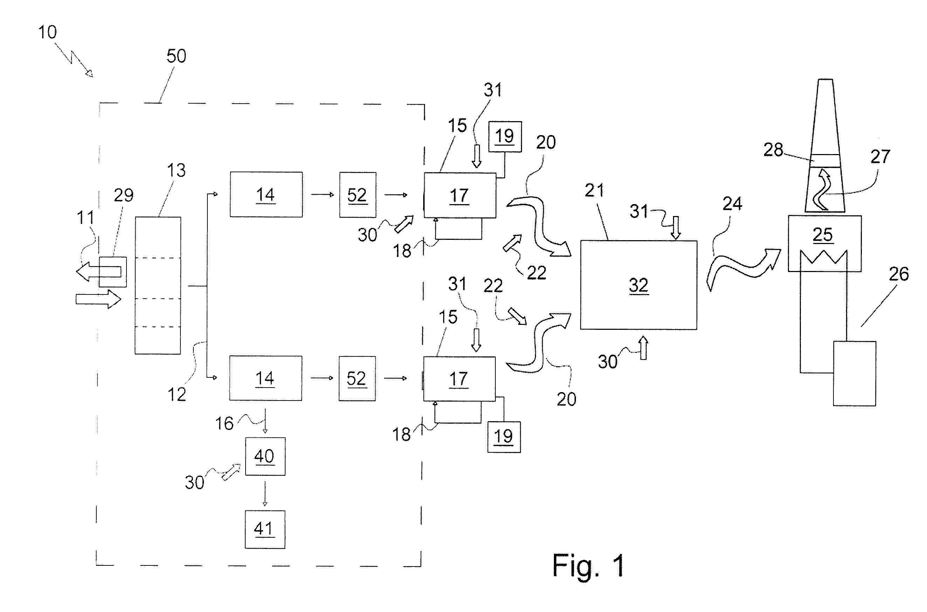

Figure 1 shows a block diagram of the process of the invention.

Below is a list of the different parts of the invention, which are indicated in the above drawings with their respective numbers; (10) waste management plant, (11) entry and exit of vehicles carrying waste to the plant (10), (12) separation of incoming waste, (13) controlled storage of waste, (14) pre-treatment of each one of the groups of waste, (15) previous combustion chamber, (16) outlet for re-treated waste, (17) previous combustion of waste, (18) recirculation of partially burned waste, (19) handling of ashes, (20) outlet for smoke from previous combustion, (21) post-combustion chamber, (22) ammonia injection, (23) gas sweeping system, (24) outlet for post-combustion gases, (25) steam generator, (26) generation of electricity by a circuit of steam and cooling of the circuit of water, (27) the expelling of smoke to the outside, (28) filters, (29) vehicle cleaning system, (30) addition of biomass, (31) addition of oxygen, (40) mixture of biomass and pre-treated waste, (41) compacted and processed for the obtaining of pellets, (50) waste reception building, (51) extraction system for the depression of the waste reception building (50), (52) pre-treated waste tank.

### Description of an embodiment of the invention.

In one of the preferred embodiments of the invention, the treatment plant (10) that carries out the process of the treatment and evaluation of urban waste is made up of a building for the reception (50) of urban waste, which vehicles transporting this waste have access to. The building is in environmental depression, thanks to the operation of an air extraction system (51) that creates the environmental depression, so the emitting of odours accompanying the waste into the surrounding air is avoided when the points of communication with the outside are opened.

For the same reason, the trucks and vehicles leaving the waste reception building will go through a cleaning system (29) made up of a pool of water heated by the energy of the process, which cleans the wheels of possible traces of waste that may be taken to the outside and cause odours.

The entry of waste vehicles (11) is controlled, and permission to access or deposit the load in the controlled storage (13) depends on the amount that is already inside, and the estimate of what will be needed during the day of production, as the present process will not store any waste not treated through the pre-treatment operations at the end of the day (14).

In the present embodiment, which may have various alternatives of distribution according to the number of previous chambers (15) the plant (10) has, before this pre-treatment (14), the waste that has been unloaded is separated (12) into two groups of organic waste matter, differentiated from each other by the fact that one comes from food that is past expiration or rotten and the other is from organic matter recovered from urban waste. In addition to this waste, biomass from pruning and urban cleaning also enters, as well as waste from the conditioning of forest or non-urban areas.

The pre-treatment (14) of each one of the groups of waste, which is carried out by conditioning the same to obtain a waste that does not include matter that is not ideal for combustion, to achieve a grain size that is suitable for handling, and with ideal conditions of moisture. This starts from a grinding, and a visual separation, as well as the separation of metals, then later crushing and screening again using rotary sieves. Then it goes through X-ray separation and the necessary means to put this pre-treated urban waste into the condition necessary for the efficiency of the process.

This pre-treated waste is held in a pre-treated waste holding tank (52) awaiting placement in the respective previous combustion chamber (15). It goes on to the next phase through a system that gathers the matter that has been in the tank the longest first, in order to avoid the creation of odours and pollution due to the decomposition of pre-treated waste at this point as well.

The automated control system of the process, once the features of the waste delivered and pre-treated have been entered, at this point places the necessary amount of the pre-treated waste from each one of the separated groups into the previous combustion chamber (15).

With another part of the aforementioned pre-treated waste, there is an outlet (16) from the process of the generation of electricity through combustion to make a mixture (40) with biomass and continue the process towards the production of densified solid biofuel, or pellets, according to what is established as possible by the control system in order to maintain the efficiency of said process of producing energy.

Once the control system has placed the necessary amount of each type of pre-treated waste into the corresponding previous combustion chamber (15), in this chamber (15) a first incomplete combustion (17) is performed, with oxygen (31) below the stoichiometric proportion added (50 - 80%, regulated by the control system), performed under conditions of pyrolysis, avoiding the formation of dioxins and furans as much as possible. In addition to this, a system for the elimination of nitrogen dioxides is placed there, using ammonia injection (22). Combustion in this previous chamber is done by the addition (30) of biomass as fuel and of the products obtained in the process of creating the densified solid biomass itself, obtaining smoke that has a temperature of 850° C, which stays there at least 2 seconds.

The outlet of the smoke (20) from the previous combustion leads to a second post-combustion chamber (21), where there is a complete combustion of the organic matter contained in the smoke (20). This combustion is done with the addition (30) of biomass, which allows the temperature of the combustion and post-combustion gases to reach temperatures of about 1200 °C, keeping them in the aforementioned post-combustion chamber (21) for at least 6 seconds.

The outlet (24) of combustion gases from the post-combustion chamber (21) leads mainly to the steam generator (25), so that electricity (26) is generated in the system associated with the turbine that drives the circuit of steam-water heated by the gases (24).

Both the gases that have passed through the steam generator (25) and the gases that the control system has expelled without passing through said generator (25) for reasons of safety or efficiency are passed through filters (28) and expelled to the outside (27). Their composition and physical features are controlled to be able to act on them through more filters (28) or refrigerators/recuperators that condition the gases given off so that they do not affect the environment outside significantly.

For the first combustions of the process, as well as for the moments when the control system detects a concentration of the release of post-combustion (24) gases that is not the appropriate one, there is a gas sweeping (23) process.

Waste burned partially in the previous combustion chamber (15) is put into recirculation (18) to burn again in the previous combustion chamber (15), allowing the plant to take advantage of the calorific power of the waste that has not burned completely, and so on as many times as necessary, and as the control system determines by the temperature achieved with each combustion. Once the time comes to get rid of the ash, it is handled (19) for removal by being compacted and buried or it is gathered in appropriate containers and taken advantage of in the usual processes and applications for this type of inert products, such as for auxiliary building materials, dry matter for motorway conglomerate, an ingredient in fertiliser for agriculture, etc.

The mixture (40) of biomass and pre-treated waste that have not entered into the previous combustion chamber (15) is handled to give it certain physical characteristics for processing and compacting (41), regulating the percentage of the mixture through the control system so that it has a density of around 1.2 Kg/dm3, a PCI of the finished product of about 15 MJ/kg, a relative humidity of up to 10% and a brittleness of 0.935. The formats that are created are in diameters that range from 6 to 22 mm and lengths of 3.5 to 6.5 cm.

The entire process is automated by the action of the control system, which gathers the characteristics of the waste entered in the process, regulates its flow into the previous combustion chamber (15) and its recirculation (18), as well as the addition of oxygen (31) to the combustion and the addition of biomass (30) and other fuels. It receives information from the temperature control sensors about the smoke in the outlets from the chambers, as well as expulsion to the outside. Composition, pressure and temperature are known, so as to be able to act on the flow and its passing through the phases of combustion, as well as through the steam generators, refrigerators/ recuperators, filters (28), or the starting of the gas sweeping (23) system.

The control system acts on the rest of the procedure for the obtaining of electricity by controlling the circuit of steam and the operation of the turbine, as well as the obtaining of the final electricity.

The control system controls the mixture (40), the processing, and the compacting (41) of the biomass and pre-treated waste for the obtaining of densified solid biofuel under the pre-established conditions.

Having sufficiently described this invention using the drawings attached, it is easy to understand that any modification may be made to the detail which may be deemed to be appropriate, whenever these changes do not alter the essence of the invention summarised in the following claims:

## Claims

1. Process for the treatment and evaluation of urban waste which performs a pre-treatment of the urban waste received, and through the combustion of the same, obtains the heating of a fluid for the formation of steam, which creates electricity, **characterised in that** this process is made up of the following phases:
A. Controlled reception, the regulation and separation of urban waste restricted to the plant's handling capacity, without storing any waste that is not pre-treated.
B. The cleaning of vehicles entering and leaving the plant, as well as making the environmental pressure inside the plant lower than the outside environmental pressure.
C. Pre-treatment of urban waste and grouping or separation into groups of waste according to the number of previous chambers that the post-combustion chamber has.
D. Previous combustion of urban waste in one or more previous chambers, under conditions of pyrolysis, with a deficit of air in its stoichiometric proportion.
E. Post-combustion of the smoke produced in previous combustion, with the controlled addition of non-polluting auxiliary fuel, preferably biomass, in a setting with sufficient oxygen to produce the total combustion of the organic matter that might remain in the smoke.
F. The smoke produced by the combustion is used for the heating of the exchange fluid to produce steam in the generator.
G. The pre-treated waste that is partially burned in the previous combustion is placed again the previous combustion chamber as many times as necessary until it is completely burned, and the final ashes are treated as inert products.
H. The mixture of biomass and of part of the pre-treated waste that hasn't entered into combustion is treated for compacting, obtaining a densified solid biofuel product.
I. Hot water is produced in the phases of expelling the gases to the outside for auxiliary processes.
J. These processes are controlled totally automatically, receiving information about the features of the compounds (waste, smoke, water, steam, etc.) and of the physical features that pass through the process, and acting on the addition of waste of each type to the previous chambers, the passage of smoke to the post-combustion chamber, the fuel used in both chambers, the addition of oxygen to them, the flow of smoke to the steam generator, the systems for the elimination of dioxins and furans, as well as the sweeping of gases, and the conditions of the processes of economisers and overheaters that are usual in the rest of the process.

2. Process according to claim 1 **characterised in that** the previous combustion phase has conditions of stoichiometric proportions of oxygen in 50 - 80% of those allowed by total combustion, and with the smoke remaining in the previous combustion chamber for at least 2 seconds and with temperatures of between 850 °C and 1000 °C.

3. Process according to claim 1 **characterised in that** in the post-combustion phase the smoke remains in the post-combustion chamber for at least 6 seconds, and with temperatures of up to 1200 °C.

4. Process according to claim 1 **characterised in that** the mixture of biomass and pre-treated waste is treated so as to leave the relative humidity of the compound at 8 - 10% and in proportions that have a calorific power of at least 4000 Kcal/kg.

5. Process according to claim 1 **characterised in that** once the densified solid biofuel products are produced, part of them are reused in the combustion of the chambers, and the rest is sent out for storage and sale.

6. Process according to claim 1 **characterised in that** the process of cleaning of vehicles uses water heated by the gases expelled by the process.

7. Waste treatment plant for carrying out the process of the treatment and evaluation of urban waste that has machinery for the pre-treatment of waste, its combustion and for taking advantage of this combustion to generate electricity **characterised in that** the plant has a means of maintaining the environmental pressure on the inside of the plant lower than the environmental pressure outside of the plant. It also has a means for controlling, regulating, and limiting the supply of waste, and the plant has at least one combustion chamber prior to the post-combustion chamber, which may be joined to more than one previous combustion chamber, with means of production of densified solid biofuel products, a system for cleaning vehicles that are in contact with the waste, and an automatic system that controls the processes set out in claim 1.

8. Waste treatment plant according to claim 7 **characterised in that** the previous combustion chambers, post-combustion chambers, and recirculation of pre-treated waste use a single furnace.

9. Waste treatment plant according to claim 7 **characterised in that** the systems for cleaning vehicles comprise pools of water heated by taking advantage of the gases, where the wheel of the vehicle is submerged.

10. Product obtained by the process according to claim 1, which is obtained within a process of the production of electricity, **characterised in that** the product formed is a densified solid biofuel composed of a mixture of biomass and pre-treated waste, compacted, with a density of 1 to 1.5 kg/dm3 and with a relative humidity between 8 - 10% and a Low Calorific Value of at least 15 KJ/kg.

11. Product according to claim 10 **characterised in that** the proportions of biomass and pre-treated waste are between 10-50% and 90-50%, respectively.

## Patentansprüche

1. Verfahren zur Behandlung und Verwertung von Siedlungsabfällen, bei dem eine Vorbehandlung der angelieferten Siedlungsabfälle erfolgt und durch Verbrennung dieser Abfälle die Erhitzung einer Flüssigkeit zur Dampfbildung, die wiederum Strom erzeugt, erzielt wird, **dadurch gekennzeichnet, dass** dieses Verfahren aus folgenden Phasen besteht:
A. Kontrollierte und auf die Kapazität der Anlage beschränkte Annahme, Regulierung und Trennung von Siedlungsabfällen, wobei keine Einlagerung von nicht vorbehandelten Abfällen erfolgt.
B. Reinigung der in der Anlage ein- und ausgehenden Fahrzeuge sowie Senkung des Umgebungsdrucks im Inneren der Anlage im Verhältnis zum äußeren Umgebungsdruck.
C. Vorbehandlung der Siedlungsabfälle und Sortierung oder Trennung in Abfallgruppen entsprechend der Anzahl der Vorkammern, über welche die Nachbrennkammer verfügt.
D. Vorverbrennung der Siedlungsabfälle in einer oder mehreren Vorkammern unter Pyrolysebedingungen mit Luftmangel in einem stöchiometrischen Verhältis.
E. Nachverbrennung des in der Vorverbrennung erzeugten Rauches mit kontrollierter Zugabe von umweltfreundlichem Zusatzbrennstoff, vorzugsweise Biomasse, in einem Milieu mit ausreichend Sauerstoff, um die vollständige Verbrennung der eventuell im Rauch verbleibenden organischen Stoffe zu bewirken.
F. Der bei der Verbrennung entstehende Rauch wird zum Beheizen der Tauschflüssigkeit verwendet, um Dampf im Generator zu erzeugen.
G. Die vorbehandelten Abfälle, die bei der Vorverbrennung teilweise verbrannt werden, kommen erneut in die Vorkammer, und zwar so oft, wie es nötig ist, bis sie vollständig verbrannt sind, wobei die letzte Asche als inertes Produkt behandelt wird.
H. Die Mischung aus Biomasse und einem Teil der vorbehandelten Abfälle, die nicht der Verbrennung zugeführt werden, wird zu einem verdichteten festen Biobrennstoffprodukt gepresst.
I. In den Phasen des Gasausstoßes nach außen wird Heißwasser für Hilfsprozesse erzeugt.
J. Diese Vorgänge werden vollautomatisch gesteuert, wobei Angaben zur Beschaffenheit der Stoffe (Abfälle, Rauch, Wasser, Dampf etc.) und zu den physikalischen Merkmalen, die den Prozess passieren, übermittelt werden und wobei auf die Zugabe der einzelnen Abfallsorten in die Vorkammern, auf das Einströmen von Rauch in die Nachbrennkammer, auf den in beiden Kammern verwendeten Brennstoff, auf die Zugabe von Sauerstoff in die Kammern, auf das Einströmen der Rauchgase in den Dampferzeuger, auf die Systeme zur Beseitigung von Dioxinen und Furanen sowie auf die Reinigung der Gase und auf die Prozessbedingungen der für den restlichen Ablauf üblichen Vorwärmer und Überhitzer Einfluss genommen wird.

2. Verfahren nach Anspruch 1, **dadurch gekennzeichnet, dass** die Bedingungen in der Vorverbrennungsphase ein stöchiometrisches Verhältis mit einem Sauerstoffgehalt von 50-80% des bei einer vollständigen Verbrennung zulässigen Sauerstoffgehaltes aufweisen und wobei der Rauch für mindestens 2 Sekunden bei Temperaturen zwischen 850 °C und 1000 °C in der Vorkammer verweilt.

3. Verfahren nach Anspruch 1, **dadurch gekennzeichnet, dass** der Rauch in der Nachverbrennungsphase für mindestens 6 Sekunden bei Temperaturen bis zu 1200 °C in der Nachbrennkammer verweilt.

4. Verfahren nach Anspruch 1, **dadurch gekennzeichnet, dass** die Mischung aus Biomasse und vorbehandelten Abfällen so behandelt wird, dass die relative Feuchtigkeit der Verbindung bei 8-10% liegt und dass die Mengenverhältnisse eine Heizkraft von mindestens 4000 kcal/kg ergeben.

5. Verfahren nach Anspruch 1, **dadurch gekennzeichnet, dass** nach Erzeugung der verdichteten festen Biobrennstoffprodukte ein Teil davon für die Verbrennung in den Kammern wiederverwendet und der Rest zu Lagerungs- und Verkaufszwecken weitergeleitet wird.

6. Verfahren nach Anspruch 1, **dadurch gekennzeichnet, dass** das durch die im Verfahren ausgestoßenen Gase erhitzte Wasser zur Reinigung der Fahrzeuge verwendet wird.

7. Abfallbehandlungsanlage zur Durchführung des Verfahrens zur Behandlung und Verwertung von Siedlungsabfällen mit einer maschinellen Ausrüstung zur Vorbehandlung und Verbrennung von Abfällen und zur Nutzung dieser Verbrennung zwecks Stromerzeugung, **dadurch gekennzeichnet, dass** die Anlage Mittel aufweist, um den Umgebungsdruck im Inneren der Anlage im Vergleich zum außerhalb der Anlage bestehenden Druck geringer zu halten. Ebenfalls verfügt sie über Mittel zur Kontrolle, Regulierung und Beschränkung der Abfallzufuhr und hat mindestens eine der Nachbrennkammer vorgelagerte Brennkammer, die mit mehr als einer Vorbrennkammer verbunden werden kann, sowie Mittel zur Herstellung von verdichteten festen Biobrennstoffprodukten, ein Reinigungssystem für Fahrzeuge, die mit den Abfällen in Berührung kommen, und eine automatische Einrichtung, welche die in Anspruch 1 dargelegten Vorgänge steuert.

8. Abfallbehandlungsanlage nach Anspruch 7, **dadurch gekennzeichnet, dass** für die Vorbrennkammern, die Nachbrennkammern und die Rückführung der vorbehandelten Abfälle ein einziger Brennofen verwendet wird.

9. Abfallbehandlungsanlage nach Anspruch 7, **dadurch gekennzeichnet, dass** die Systeme zur Fahrzeugreinigung Wasserbecken umfassen, in welche die Räder der Fahrzeuge eingetaucht werden, wobei das Wasser unter Ausnutzung der Gase aufgeheizt wird.

10. Produkt, das durch das Verfahren nach Anspruch 1 im Rahmen eines Prozesses der Stromerzeugung gewonnen wird, **dadurch gekennzeichnet, dass** es sich bei dem gebildeten Produkt um einen verdichteten festen Biobrennstoff handelt, der sich aus einer Mischung aus Biomasse und vorbehandelten Abfällen zusammensetzt, zu einer Dichte von 1 bis 1,5 kg/dm3 gepresst ist und eine relative Feuchtigkeit von 8-10% sowie einen unteren Brennwert (LCV) von mindestens 15 kJ/kg aufweist.

11. Produkt nach Anspruch 10, **dadurch gekennzeichnet, dass** das Verhältnis von Biomasse zu vorbehandelten Abfällen zwischen 10-50% und 50-90% liegt.

## Revendications

1. Procédure pour le traitement et l'évaluation de déchets urbains qui réalise un prétraitement des déchets urbains reçus et à travers leur combustion obtient la chaleur d'un fluide pour la formation de vapeur, qui crée de l'électricité, **caractérisée en ce que** cette procédure est composée des phases suivantes :
A. Réception contrôlée ; la régulation et la séparation des déchets urbains sont restreintes à la capacité de manipulation du site, sans stockage de tout déchet qui n'est pas prétraité.
B. Le nettoyage des véhicules qui entrent et sortent du site, en plus de rendre la pression environnementale à l'intérieur du site inférieure à la pression environnementale extérieure.
C. Prétraitement des déchets urbains et groupage ou séparation en groupes de déchets conformément au nombre de chambres préalables que la chambre de précombustion possède.
D. Combustion préalable des déchets urbains dans une ou plusieurs chambres préalables, dans des conditions de pyrolyse, avec un déficit d'air dans sa proportion stoechiométrique.
E. Postcombustion de la fumée produite dans la combustion préalable, avec un ajout contrôlé de carburant auxiliaire non polluant, biomasse de préférence, à un endroit possédant suffisamment d'oxygène pour produire la combustion totale de la matière organique qui peut demeurer dans la fumée.
F. La fumée produite par la combustion est utilisée pour le chauffage du fluide d'échange pour produire de la vapeur dans le générateur.
G. Les déchets prétraités qui sont partiellement brûlés dans la chambre de combustion préalable sont à nouveau placés dans la chambre de combustion préalable autant de fois que nécessaire jusqu'à ce qu'ils soient entièrement brûlés et que les cendres finales soient traitées comme des produits inertes.
H. Le mélange de biomasse et d'une partie des déchets prétraités qui n'ont pas été introduits dans la combustion est traité pour le compacter, ce qui permet d'obtenir un produit biocarburant solide densifié.
I. L'eau chaude est produite dans les phases de dégagement des gaz vers l'extérieur pour des procédures auxiliaires.
J. Ces procédures sont entièrement automatiquement contrôlées, en recevant des informations sur les caractéristiques des composés (déchets, fumée, eau, vapeur, etc.) et sur les caractéristiques physiques qui se produisent pendant la procédure, et en agissant sur l'ajout de déchet de chaque type dans les chambres préalables, le passage de fumée vers la chambre de postcombustion, le carburant employé dans les deux chambres, l'ajout d'oxygène dans celles-ci, le débit de fumée vers le générateur de vapeur, les systèmes d'élimination de dioxines et furanes, ainsi que le dégagement des gaz, et les conditions des procédures des économiseurs et surchauffeurs qui sont habituels dans le reste de la procédure.

2. Procédure conformément à la revendication 1 **caractérisée en ce que** la phase de combustion préalable a des conditions de proportions stoechiométriques d'oxygène de 50-80 % de celle permise par la combustion totale, la fumée restant dans la chambre de combustion au moins pendant 2 secondes avec des températures comprises entre 850° et 1 000° C.

3. Procédure conformément à la revendication 1 **caractérisée en ce que** pendant la phase de précombustion la fumée reste dans la chambre de postcombustion pendant au moins 6 secondes, avec des températures atteignant jusqu'à 1 200° C.

4. Procédure conformément à la revendication 1 **caractérisée en ce que** le mélange de biomasse et de déchets prétraités est traité de sorte à laisser l'humidité relative du composé à 8-10 % et dans des proportions qui ont une puissance calorifique d'au moins 4 000 kcal/kg.

5. Procédure conformément à la revendication 1 **caractérisée en ce que** lorsque les produits de biocarburant solides densifiés sont produits, une partie de ceux-ci est réutilisée dans la combustion des chambres, et le reste est envoyé à l'extérieur pour son stockage et vente.

6. Procédure conformément à la revendication 1 **caractérisée en ce que** la procédure de nettoyage des véhicules emploie de l'eau chauffée par des gaz dégagés par la procédure.

7. Site de traitement de déchets pour réaliser la procédure de traitement et d'évaluation de déchets urbains qui inclut une machinerie pour le prétraitement des déchets et leur combustion, et profitant de cette combustion pour générer de l'électricité, **caractérisé en ce que** le site a des moyens pour maintenir la pression environnementale à l'intérieur du site inférieure à la pression environnementale à l'extérieur du site. Il a également des moyens pour contrôler, réguler et limiter la fourniture de déchets, et le site a au moins une chambre de combustion avant la chambre de postcombustion, qui peut être reliée à plusieurs autres et non seulement à la chambre de combustion préalable, avec des moyens de production de produits de biocarburant solides densifiés, un système de nettoyage des véhicules qui sont en contact avec les déchets, et un système automatique qui contrôle les procédures réalisées dans la revendication 1.

8. Site de traitement de déchets conformément à la revendication 7 **caractérisé en ce que** les chambres de combustion préalables, les chambres de postcombustion et la recirculation des déchets prétraités emploient un seul four.

9. Site de traitement de déchets conformément à la revendication 7 **caractérisé en ce que** les systèmes de nettoyage des véhicules comprennent des piscines d'eau chauffée en profitant des gaz, où la roue du véhicule est submergée.

10. Produit obtenu par la procédure conformément à la revendication 1 qui est obtenu à travers la procédure de production d'électricité, **caractérisé en ce que** le produit formé est un biocarburant solide densifié composé d'un mélange de biomasse et de déchets prétraités, compacté, avec une densité de 1 à 1,5 kg/dm³, une humidité relative comprise entre 8 et 10% et une valeur calorifique inférieure d'au moins 15 kJ/kg.

11. Produit conformément à la revendication 10 **caractérisé en ce que** les proportions de biomasse et de déchets prétraités sont comprises entre 10 et 50 % et 50-90 % respectivement.
